# EUROPEAN PATENT SPECIFICATION

(11) **EP 3 436 917 B1**
(45) Date of publication and mention of the grant of the patent: **26.06.2024**
(21) Application number: 17717289.7
(22) Date of filing: 29.03.2017
(51) Int. Cl.: G06F 3/0488, G06F 17/10, G09B 7/02, H04N 21/432, H04N 21/4728, H04N 21/472, H04N 21/458

(54) **DOCUMENT CONTENT REPLAY**
DOKUMENTINHALTSWIEDERGABE
RELECTURE D'UN CONTENU DE DOCUMENT

(30) Priority: 01.04.2016 US 201662317441 P; 15.08.2016 US 201615237425
(43) Date of publication of application: 06.02.2019
(73) Proprietor: Microsoft Technology Licensing, LLC, Redmond, WA 98052-6399 (US)
(72) Inventor: SYKES, Sarah, Redmond, Washington 98052-6399 (US); HARTMAN, Jason H., Redmond, Washington 98052-6399 (US); MIKUTEL, Ian William, Redmond, Washington 98052-6399 (US)
(74) Representative: Grünecker Patent- und Rechtsanwälte PartG mbB
(86) International application number: PCT/US2017/024644
(87) International publication number: WO 2017/172850

(56) References cited:
- WO-A1-2011/028885
- US-A- 5 600 775
- US-A1- 2003 174 160
- US-A1- 2015 339 282

## Description

### BACKGROUND

A user may create content via a productivity application for presentation to others, either in real time or in advance. As an example, a teacher may create a lesson plan including various math problems, or may work a number of math problems in the classroom to demonstrate to students how to solve the math problems. Oftentimes, such as with the above example, content is created in a step-by-step manner, wherein presenting or revealing the content in a step-by-step manner provides context and insight to the user that may otherwise not be understood.

Additionally, a user may add content to a document for later review. As an example, a student may complete a homework assignment, such as fill-in-the-blank worksheet, and may later want to review the homework assignment when studying for a test. The user may wish to self-test by hiding the answers and then later revealing the answers for checking correctness.

Document content is input via various methods, such as from input devices such as mice, keyboards, remote controls, and the like, or from natural user input (NUI) methods including those relying on speech recognition, touch and stylus recognition, gesture recognition both on screen and adjacent to the screen, air gestures, head and eye tracking, voice and speech, vision, touch, hover gestures, and machine intelligence.

Using digital ink input in an application produces a digital artifact which, although "handwritten," may be stored, copied, transmitted, edited, and annotated. In an educational environment, for example, applications incorporating digital ink input are oftentimes used as an educational resource for taking notes, to create lesson plans, for completing homework assignments, and the like.

WO 2011/028885 A1 relates to a system and method for virtual content collaboration. It discloses a play mode to play a notes page. A play/pause button is used to play recorded scribble and/or audio information from the starting of the page. Various speeds are proposed for playback in the forward and reverse directions. Scribbles corresponding to times before the time of the user selected scribble (or scribble cluster) may displayed on the screen, and scribble playback may start from the selected scribble timeline.

### SUMMARY

It is therefore the object of the present invention to provide a method and system for incrementally replaying content in a graphical user interface.

This object is solved by the subject matter of the independent claims.

Preferred embodiments are defined by the dependent claims.

This summary is provided to introduce a selection of concepts in a simplified form that are further described below in the Detailed Description section. This summary is not intended to identify all features of the claimed subject matter, nor is it intended as limiting the scope of the claimed subject matter.

Systems and methods are provided herein to enable improved usability of productivity applications that enables incremental replay of document content without the need for a user to intentionally structure the content in an ordered fashion. An electronic workspace internally represents its displayed content in a graph. Nodes are associated with types of content. Nodes that represent the document content have associated view elements that can know how to render that node type.

When the electronic workspace wants to render a page, it walks the graph and renders the view elements. A time travel effect can be achieved by traversing the graph in order of structural hierarchy or in order of when items were added, and marking the relevant items as objects to be rendered, hidden, or rendered semi-transparently, and then re-displaying the relevant portion of the screen. Traversing can be limited to the current viewport, or the current selection state of the nodes, or other characteristics. By employing the present disclosure, an improved user experience is provided and less memory and fewer processing resources are expended to provide incremental replay of document content.

The details of one or more aspects are set forth in the accompanying drawings and description below. Other features and advantages will be apparent from a reading of the following detailed description and a review of the associated drawings. It is to be understood that the following detailed description is explanatory only and is not restrictive; the proper scope of the present disclosure is set by the claims.

### BRIEF DESCRIPTION OF THE DRAWINGS

The accompanying drawings, which are incorporated in and constitute a part of this disclosure, illustrate various aspects of the present disclosure. In the drawings:
**FIGURE 1** illustrates a block diagram of a system enabled to accept document content inputs and to enable incremental revealing or hiding of content on a canvas in an electronic authoring environment;
**FIGURE 2** illustrates an example entry point to replay content;
**FIGURE 3** illustrates an example prompt to select content in an area of interest for replay;
**FIGURE 4** illustrates an example selection of content made by a user;
**FIGURE 5** illustrates an example incremental revealing of content displayed in the selected area of interest and an example display of play commands for controlling incremental revealing or hiding of the content;
**FIGURES 6-9** illustrate an example incremental hiding of content in a selected area of interest;
**FIGURE 10** illustrates an example selection made by a user to replay all content displayed on the canvas;
**FIGURE 11** illustrates an example incremental revealing of content on the canvas and an example display of play commands for controlling incremental revealing or hiding of the content;
**FIGURE 12** illustrates an example pane option;
**FIGURE 13** illustrates an example annotation added by a user during replay of content;
**FIGURES 14-16** illustrate an example incremental revealing of strokes for drawing a Japanese Kanji character;
**FIGURES 17-18** illustrate an example incremental revealing of a question and answer;
**FIGURE 19** is a flowchart showing general stages involved in an example method for providing document content replay;
**FIGURE 20** is a block diagram illustrating physical components of a computing device with which examples may be practiced;
**FIGURES 21A** and **21B** are block diagrams of a mobile computing device with which aspects may be practiced; and
**FIGURE 22** is a block diagram of a distributed computing system in which aspects may be practiced.

### DETAILED DESCRIPTION

The following detailed description refers to the accompanying drawings. Wherever possible, the same reference numbers are used in the drawings and the following description to refer to the same or similar elements. While aspects of the present disclosure may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the following detailed description does not limit the present disclosure, but instead, the proper scope of the present disclosure is defined by the appended claims. Examples may take the form of a hardware implementation, or an entirely software implementation, or an implementation combining software and hardware aspects. The following detailed description is, therefore, not to be taken in a limiting sense.

Systems and methods are provided herein for enabling incremental replay of document content without the need for a user to intentionally structure the content in an ordered fashion.

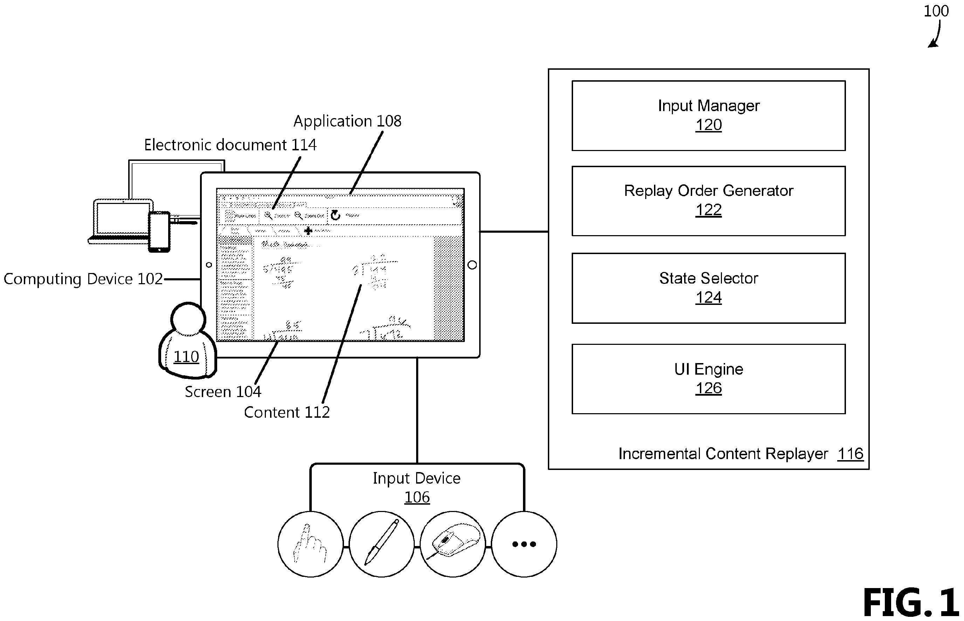

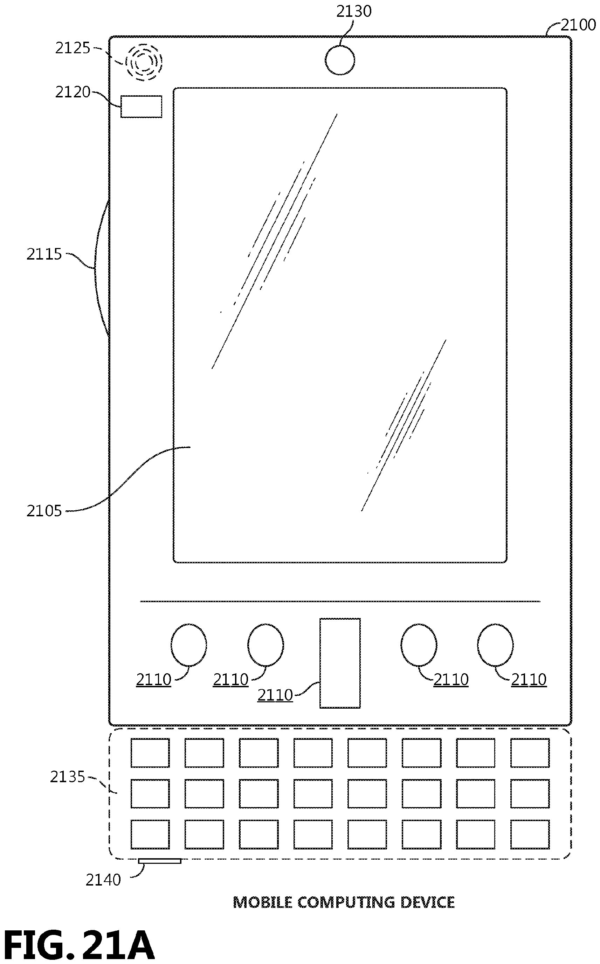

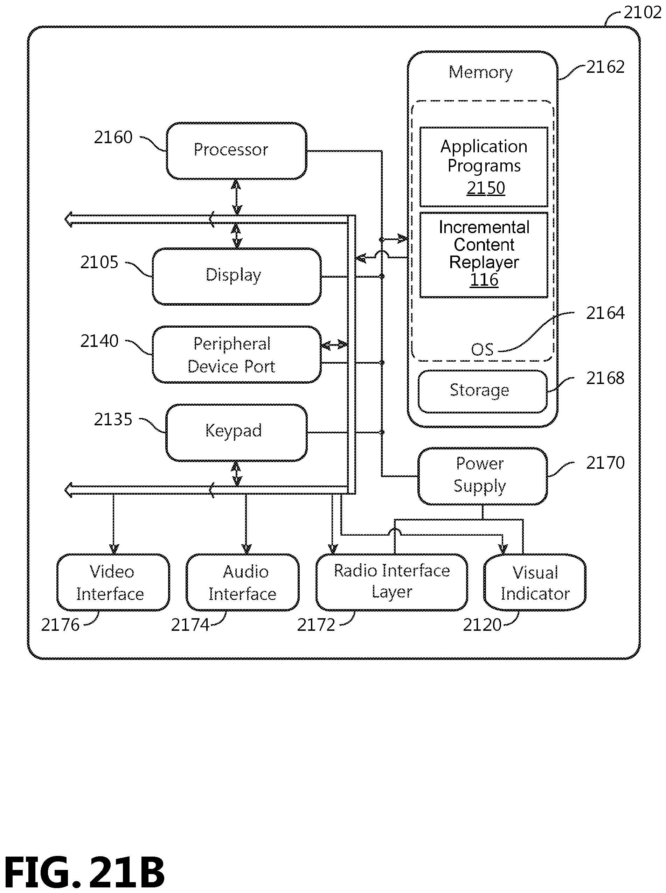

With reference now to **FIGURE 1****,** a block diagram of one example environment **100** in communication with an incremental content replayer **116** is shown. As illustrated, the example environment includes a computing device **102.** The computing device **102** illustrated in **FIGURE 1** is illustrated as a mobile computing device (e.g., a tablet computer or a mobile communication device); however, as should be appreciated, the computing device **102** may be one of various types of computing devices (e.g., a tablet computing device, a desktop computer, a mobile communication device, a laptop computer, a laptop/tablet hybrid computing device, a large screen multi-touch display, a gaming device, a smart television, a wearable device, or other type of computing device) for executing applications **108** for performing a variety of tasks. The hardware of these computing devices is discussed in greater detail in regard to **FIGURES 21**, 22A, 22B, and 23.

A user **110** may use an application **108** on the computing device **102** for a variety of tasks, which may include, for example, to write, calculate, draw, take and organize notes, prepare and organize presentations, send and receive electronic mail, make music, and the like. Applications **108** may include thick client applications **108,** which may be stored locally on the computing device **102,** or may include thin client applications **108** (i.e., web applications) that reside on a remote server and accessible over a network, such as the Internet or an intranet. A thin client application **108** may be hosted in a browser-controlled environment or coded in a browser-supported language and reliant on a common web browser to render the application **108** executable on the computing device **102.** According to an aspect, the application **108** is a program that is launched and manipulated by an operating system, and manages content **112** within an electronic document **114** and published on a display screen **104.**

The content **112** in an electronic document **114** may vary according the program used to provide the electronic document **114.** The content **112** may comprise one or more objects present or imbedded in the electronic document **114** including, but not limited to: text (including text containers), numeric data, macros, images, movies, sound files, and metadata. According to one example, the content **112** includes a plurality of digital strokes, sometimes referred to herein as "inking" input, wherein a stroke is a data object that is collected from a pointing device, such as a tablet pen, a finger, or a mouse. The stroke can be created and manipulated programmatically, and can be represented visually on an ink-enabled element, such as the ink canvas. In some examples, a stroke contains information about both its position and appearance.

In various aspects, the data comprising the content **112** are stored in an elemental form by the electronic document **114,** such as in Extensible Markup Language (XML) or Java Script Object Notation (JSON) elements or another declaratory language interpretable by a schema. The schema may define sections or content item via tags and may apply various properties to content items via direct assignment or hierarchical inheritance. For example, an object comprising text may have its typeface defined in its element definition (e.g., "<text typeface=garamond>example text</text>") or defined by a stylesheet or an element above the object in the document's hierarchy from which the element depends.

With reference still to **FIGURE 1****,** an application **108** includes or is in communication with an incremental content replayer **116,** operative to provide incremental content replay. In one example, the computing device **102** includes an incremental content replayer application programming interface (API), operative to enable the application **108** to employ incremental content replay via stored instructions.

According to aspects, the incremental content replayer **116** includes: an input manager **120;** a replay order generator **122;** a state selector **124;** and a UI engine **126.** The input manager **120** is illustrative of a software module, system, or device operative to receive a selection input. According to aspects, the selection input includes a physical act or motion performed on or by an input device **106** (e.g., finger, pen/stylus, mouse) at a position of a user-controlled cursor (such as a mouse cursor or touch-point on a touch-screen interface) that is interpreted as a selection interaction. According to an example, the input device **106** is a pointing device used to specify a position (e.g., x, y coordinates) on a graphical user interface (GUI), and manipulate on-screen objects.

According to one aspect, the input manager **120** is operative to receive an indication of a selection to replay content, for example, via a selection of a functionality control. According to another aspect, the input manager **120** is operative to receive a selection of content for incremental replay. In one example, the input manager **120** identifies the position of the user-controlled cursor (e.g., mouse cursor or touch-point) to determine an area of interest **402,** and determine if any content elements are within the area of interest **402.**

According to an aspect, the replay order generator **122** is illustrative of a software module, system, or device operative to establish a replay order of content elements that have been authored within the area of interest **402.** According to an example, the replay order generator assigns a replay-order value to each content element. In one example, the replay-order value is based on the content element's structural hierarchy in back-to-front order (i.e., z-order). In one example, ordering may be implicit in the existing structure, and identification of the structural hierarchy is performed by the replay order generator **122.** In another example, the replay-order value is based on a timestamp associated with a modification (e.g., input or content authoring) of the content element. Accordingly, newer or more recently added input has a higher replay-order value, and older or previously added input has a lower replay-order value. In another example, replay order value is based on a combination of structural hierarchy and timestamp association.

The state selector **124** is illustrative of a software module, system, or device operative to determine a selected or implicitly selected replay mode. In some examples, the determination is made based on a selected command. If the replay mode is determined to be backward, the state selector **124** is operative to identify the foremost content element that is currently displayed (in the area of interest **402**) according to the replay-order value, and change the display state of the content element to hide. If the replay mode is determined to be forward, the state selector **124** is operative to identify the backmost content element according to the replay-order value, and change the display state of the content element to be shown.

UI engine **126** is illustrative of a software module, system, or device operative to update the GUI to according to the state change. For example, the UI engine **126** is operative to update the GUI to incrementally display content in a backward or forward direction.

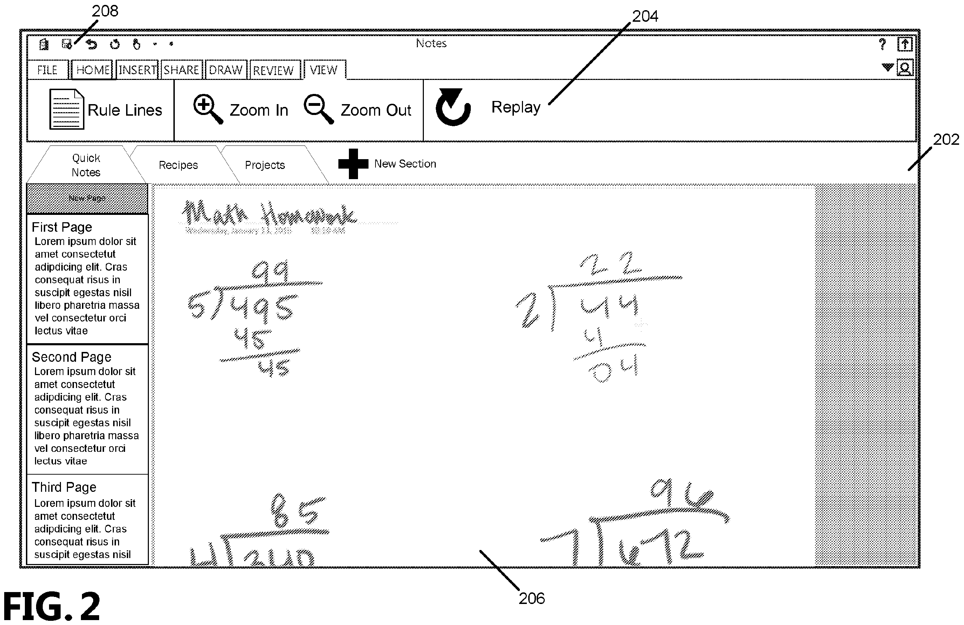

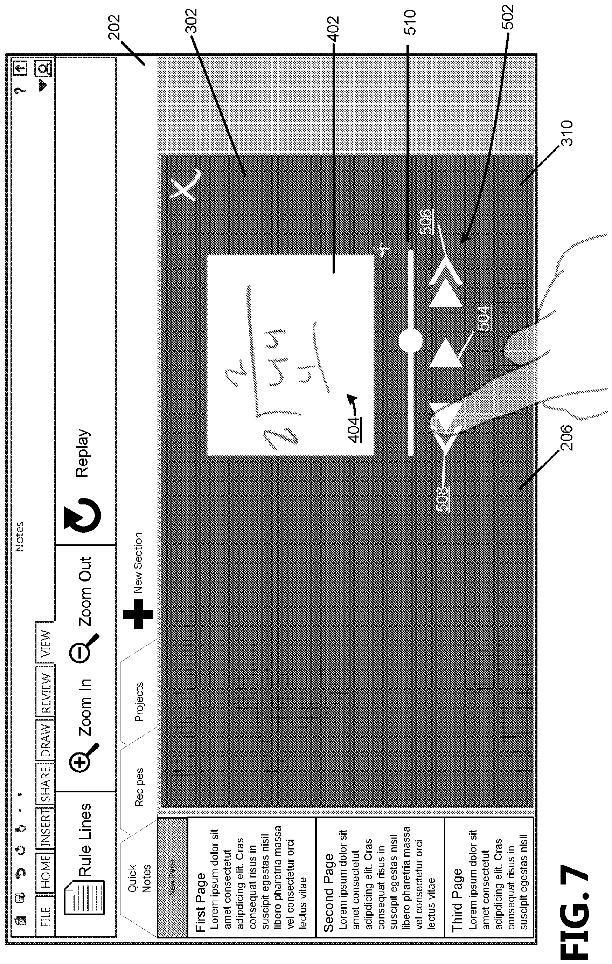

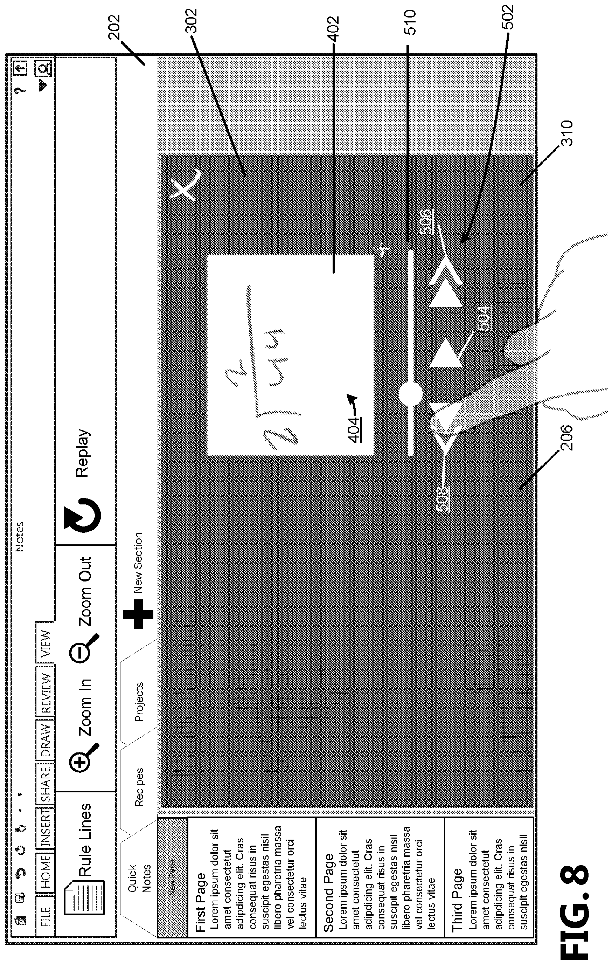

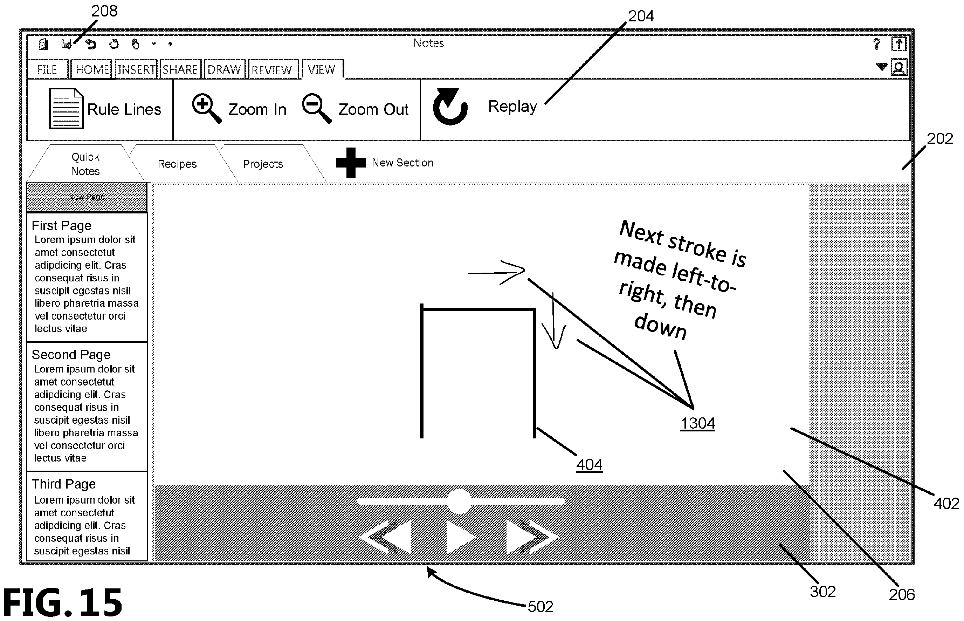

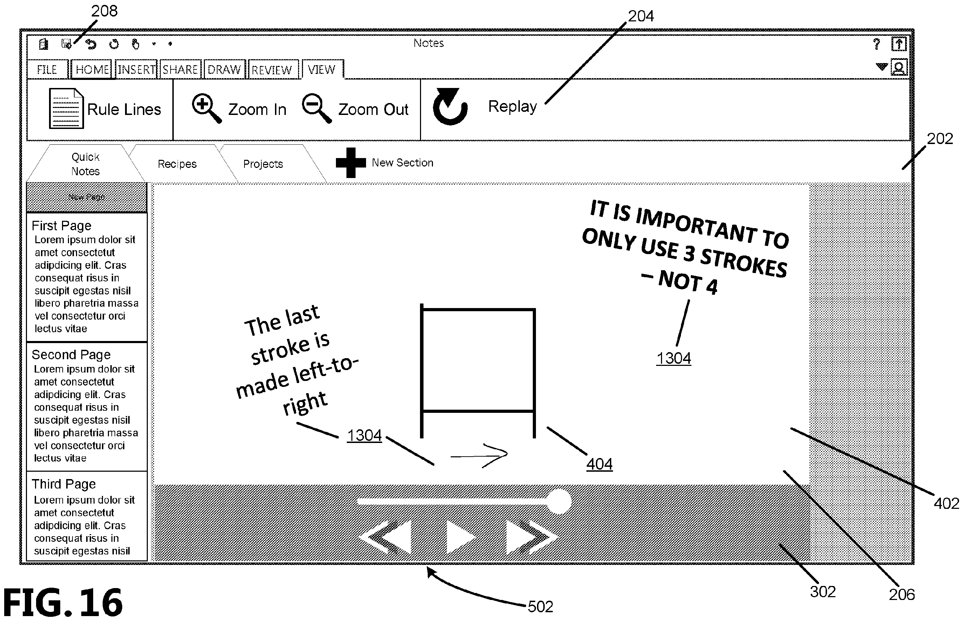

Some various example scenarios in which it may be beneficial to a user to incrementally replay content include: a teacher lecturing from prepared content in front of a class; a teacher revisiting an item that a student has a question about during a lecture; a teacher reviewing a student's work and trying to understand the student's thinking/processing; and students testing/quizzing themselves to study. **FIGURES 2-18** show various GUI examples illustrating various features of aspects of incremental replay of content. As will be appreciated, the examples illustrated in **FIGURES 2-18** are nonlimiting illustrations; other GUIs with different elements and arrangements thereof may be used in conjunction with the present disclosure. An example of a situation in which it may be beneficial to a user to incrementally replay content includes learning to work math problems. **FIGURES 2-13** show various examples of replay of content involving math problems. With reference now to **FIGURE 2****,** an illustration showing an example entry point **204** to replay content is provided. As illustrated, a GUI **202** including a page displayed on a canvas **206** displayed in an application window functionality interface **208.** According to one example, the canvas **206** is a freeform area in which elements may be inserted into their own movable containers. According to an aspect, an entry point **204** for content replay is provided. In the illustrated example, the entry point **204** is labeled as "Replay," and is displayed in a command bar that organizes the features of an application into a series of tabs at the top of the application window functionality interface **208.**

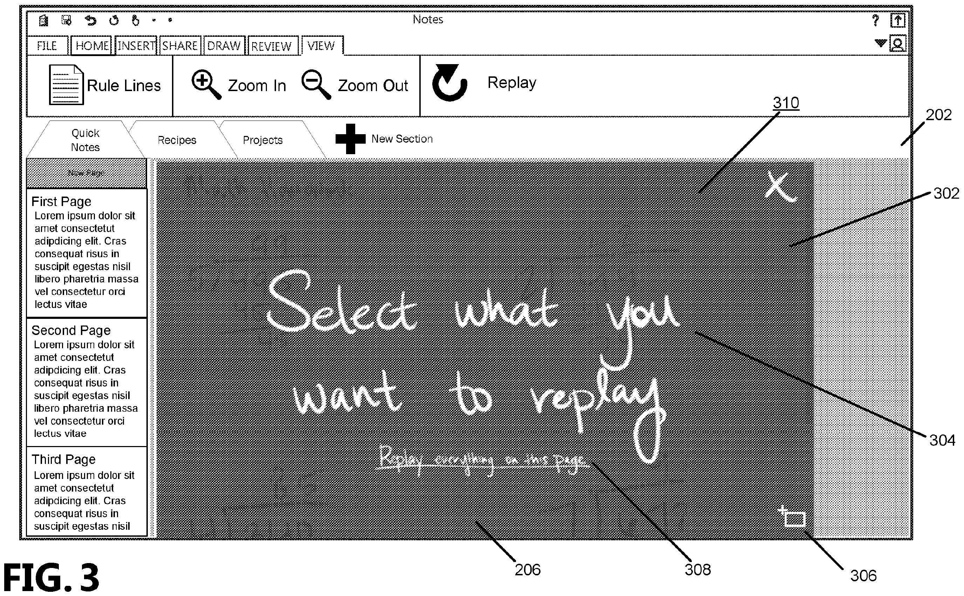

Upon selection of the entry point **204,** and with reference now to **FIGURE 3****,** a canvas overlay **302** is added over the displayed canvas **206** area. For example, the canvas overlay **302** is displayed over unselected content **310** (e.g., content that has not been selected for replay), wherein a hint of the unselected content is visible. In one example, the canvas overlay **302** has an opacity value, and unselected content **310** below the overlay is somewhat visible through the canvas overlay **302.**

According to examples, the canvas overlay **302** provides a prompt **304** that instructs the user to select an area of interest **402** for replay of the content within the selected area of interest **402.** In one example, the cursor becomes a marquee selector **306** that enables the user to select content displayed on the canvas **206** for replay. In another example, a "replay everything on this page" functionality command **308** is provided that enables the user to select to replay all the content currently displayed on the canvas **206.** If another page is selected, the unselected content **310** displayed below the canvas overlay **302** changes to the content on the newly-selected page.

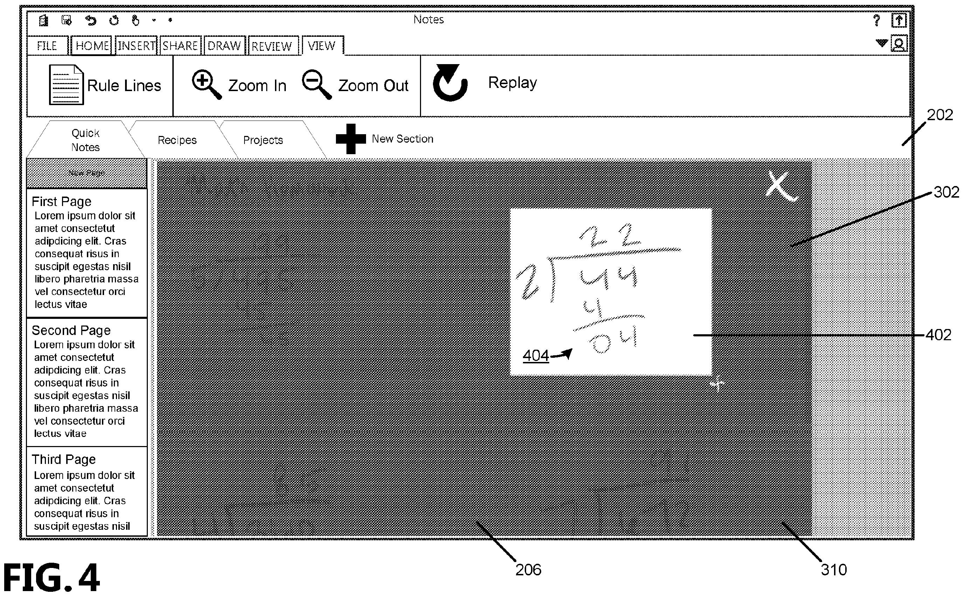

With reference now to **FIGURE 4****,** an illustration showing an example of selection of content (i.e., replay content **404**) within a selected area of interest **402** made by a user is shown. For example, the user uses the marquee selector **306** to select content to replay. In one example, the prompt **304** and "replay everything on this page" functionality command **308** are removed from the display when the user begins to make a selection. According to another example, the canvas overlay **302** remains displayed over the unselected content **310.**

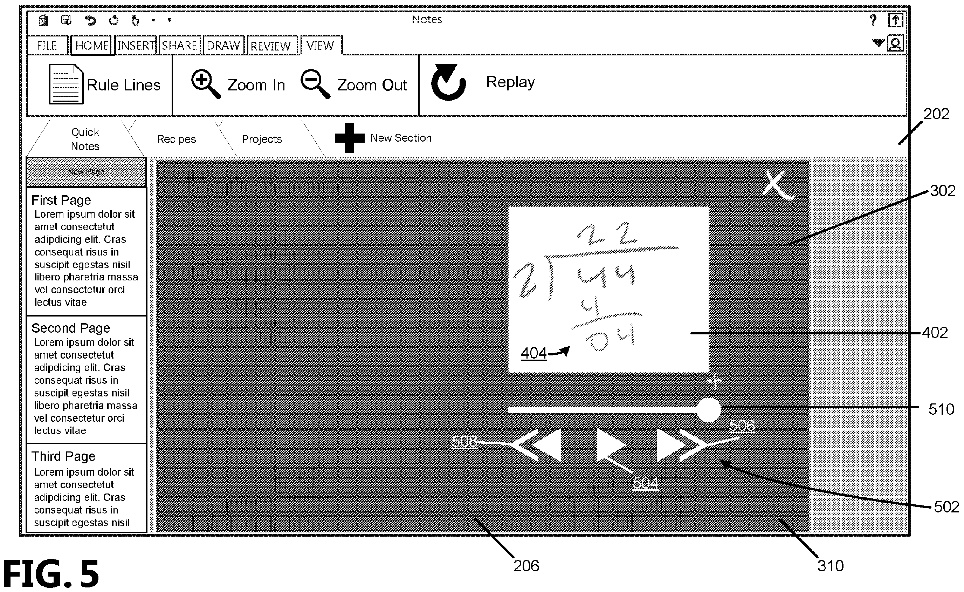

According to an aspect and with reference now to **FIGURE 5****,** when an area of interest **402** is selected, various replay commands **502** are provided that enable the user to control the replay content **404.** In one example, the replay commands **502** include a multimedia-like (audio/video) scrub bar **510,** a rewind command **508,** a play/pause command **504,** and a fast forward command **506.** According to an example, when a selection of the play/pause command **504** is made, strokes are divided into appropriate stroke lengths to avoid jarring jumps in the appearance of ink on the canvas, and each stroke or segment of a stroke is displayed incrementally according to a predetermined or adjustable time interval. According to another example, when a selection of the rewind command **508** or fast forward command **506** is received, with each click or selection of the command, the content is stepped backward or forward one object or stroke or segment of a stroke. In one example, smart grouping may be used to incrementally hide or reveal one number or letter with each click or selection. According to another example, the scrub bar **510** is a control that allows the user to move forward or backward in the replay of the selected content (replay content **404**) by dragging a handle or slider or via keyboard input, or to jump to a specific point in time or to a specific object/stroke with a selection along the scrub bar **510** progress bar or timeline. The scrub bar **510** updates visually to show the replay content's **404** replay progress.

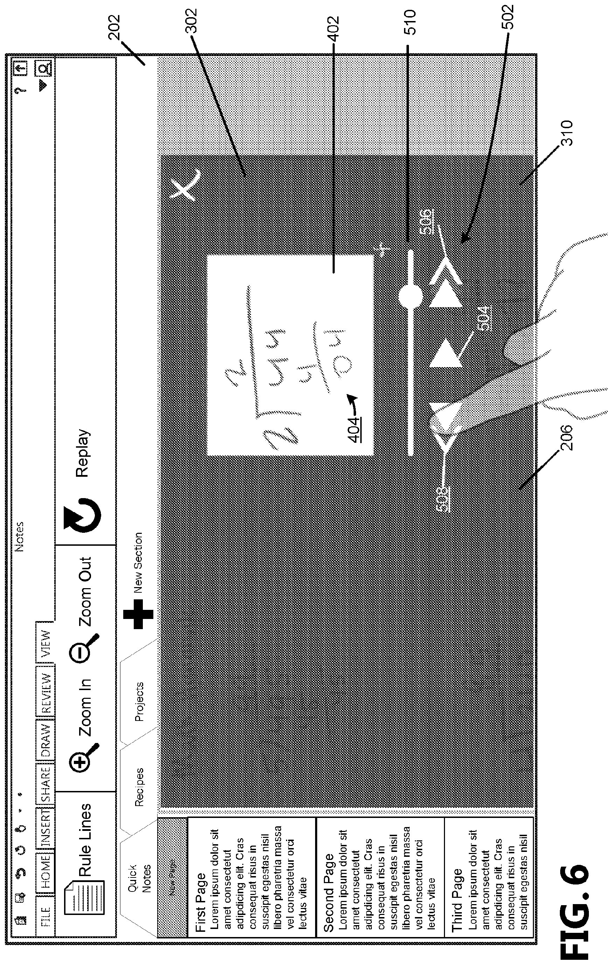

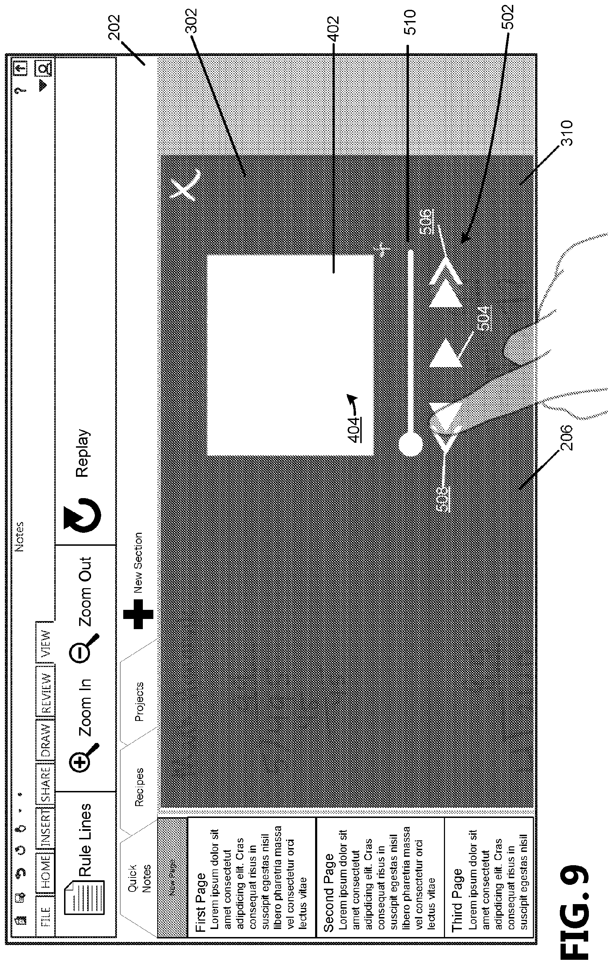

As an example and as illustrated in **FIGURE 5****,** the user selects to replay the replay content **404** in backward order, for example, by selecting the rewind command **508.** When replay content **404** is replayed in backward order, objects or strokes of the replay content **404** are incrementally hidden starting with the topmost or highest z-order valued object/stroke currently displayed. In one example, prior to selecting the rewind command **508,** the user may first move the handle or slider of the scrub bar **510** or first step forward through the content. **FIGURES 6-9** show the incremental backward stepping of objects/strokes of the replay content **404** with each successive selection of the rewind command **508** until all objects/strokes are hidden and removed from display **(****FIGURE 9****).**

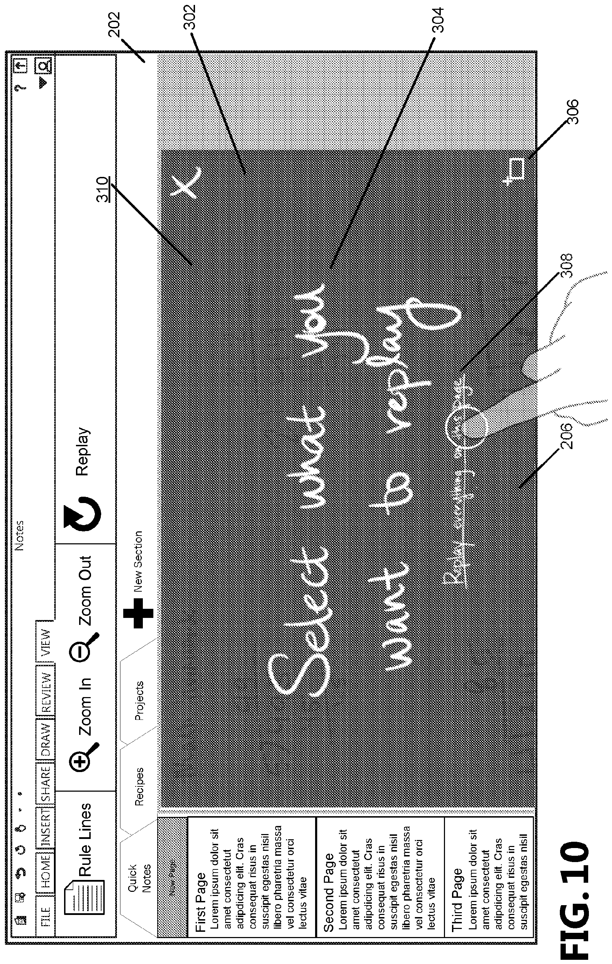

With reference now to **FIGURE 10****,** an example of a selection of the "replay everything on this page" functionality command **308** is illustrated. As described above, when the "replay everything on this page" functionality command **308** is selected, all the content visible on the canvas **206** is selected to be replayed. In one example, objects/strokes that are cut off but still visible are included in the replay content **404.** In another example, the canvas **206** pans to where the first stroke/object on the page was placed, and all strokes fully visible in that window play. Once a new stroke is partially or fully out of view, the canvas **206** pans to continue incrementally replay the replay content **404.** In one example, the zoom level stays where the user set it prior to executing the replay. In another example, the canvas zooms in on the currently replaying replay content **404** during the replay.

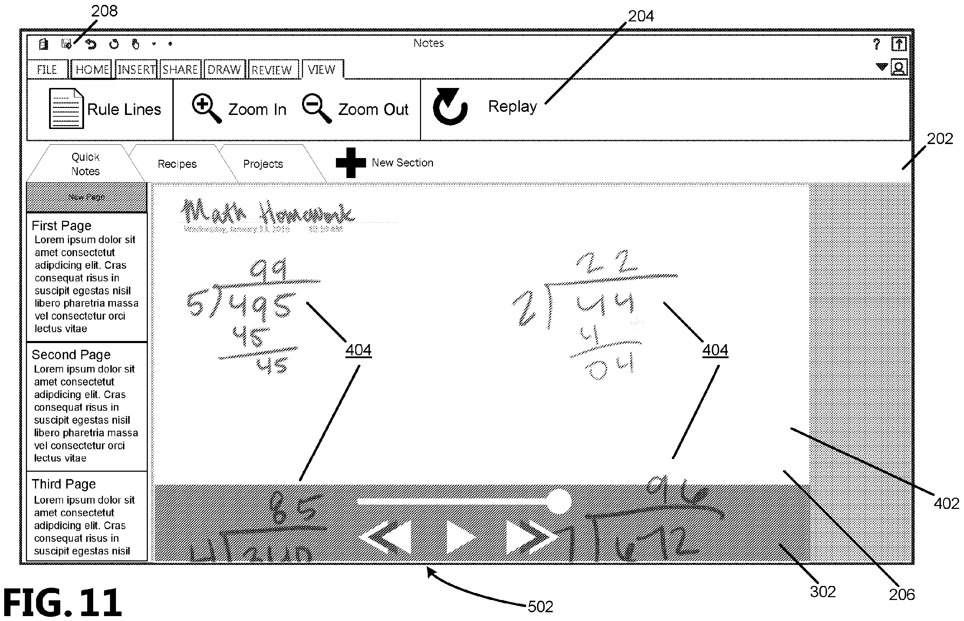

**FIGURE 11** shows an example display of incremental revealing of replay content **404** on the canvas **206** in response to a selection to replay all content visible on the canvas **206.** According to an example and as illustrated in **FIGURE 11****,** a small canvas overlay **302** may remain displayed and anchored to an edge of the application window functionality interface **208,** and the various replay commands **502** are provided that enable the user to control the replay content **404.**

Similarly to when a portion of displayed content is selected for replay as described above with respect to **FIGURE 5****,** when a selection of the play/pause command **504** is made, strokes are divided into appropriate stroke lengths to avoid jarring jumps in ink, and each stroke or segment of a stroke is displayed incrementally according to a predetermined or adjustable time interval. According to another example, when a selection of the rewind command **508** or fast forward command **506** is received, with each click or selection of the command, the content is stepped backward or forward one stroke or segment of a stroke. In one example, smart grouping may be used to incrementally hide or reveal one number or letter with each click or selection. According to another example, the user may use the scrub bar **510** to control forward or backward replay of the selected content (replay content **404**) by dragging a handle or slider, or via keyboard input. In another example, the user may choose to jump to a specific point in time or to a specific object/stroke by selecting along the scrub bar progress bar or timeline. The scrub bar **510** updates visually to show the replay content's **404** replay progress.

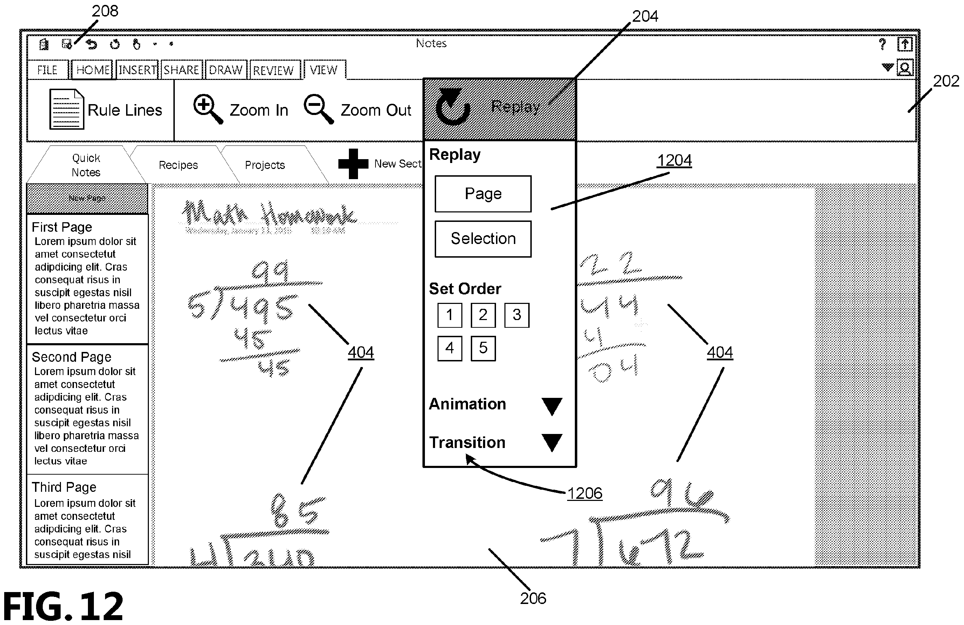

**FIGURE 12** illustrates an example pane option. For example, a pane **1204** may be displayed that includes functionalities **1206** for enabling the user to select, set numbers, animations, or transitions to move through replay content **404.** For example, the pane option functionalities **1206** enable the user to have more control over how replay content **404** is revealed or hidden. As will be appreciated, content elements may be hidden by removing them from display from the GUI, but may also include applying a reduced visibility effect on the content element (e.g., graying the content element out, applying a semi-transparent effect to the content element, decreasing a size of the content element).

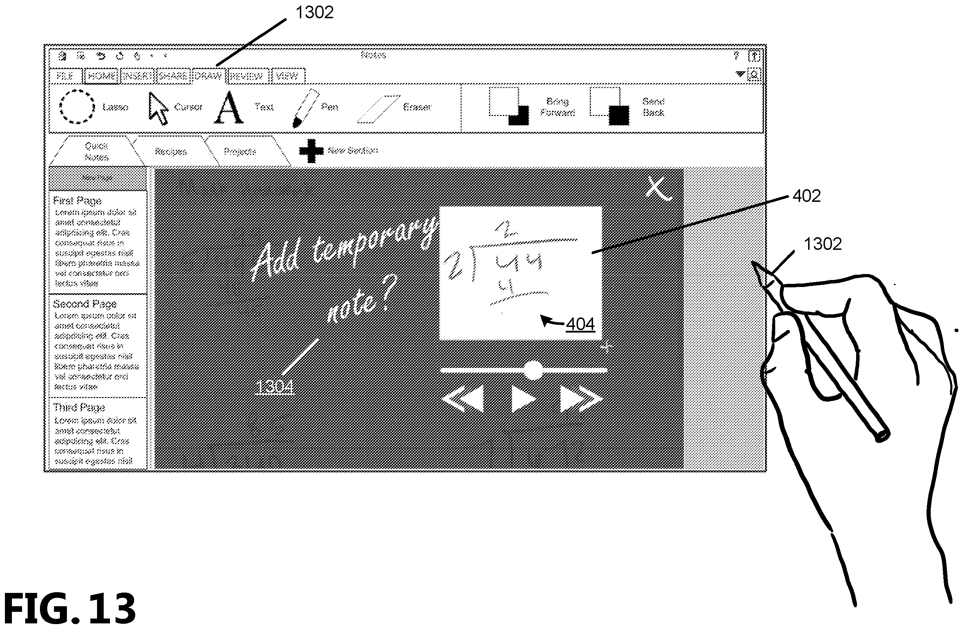

According to an aspect and as illustrated in **FIGURE 13****,** the user is enabled to interact with the replay content **404** while it is being replayed, such as to add a new content element as an annotation **1304** on top of the replay content **404** to help illustrate a point. In one example, an annotation **1304** added during replay is sandwiched into the replay order (e.g., the z-order). For example, the annotation **1304** is added on top of the last-displayed stroke, and is assigned a z-order value incrementally higher than the z-order value of the last-displayed stroke in the replay content **404.** In another example, an annotation **1304** added during replay is added to the end of the z-order of the replay content **404,** and is assigned a z-order value incrementally higher than the highest z-order value of the strokes in the replay content **404** in the selected area of interest **402.** In yet another example, the annotation **1304** shares the z-order with the position in the replay order in which it is added, to be made visible in conjunction with the replay content **404** displayed at that position in the z-order. According to an example, when a digital pen **1302** or other ink input device is detected within range of the replay content **404** while in replay mode, a selected tab in the command bar may be automatically switched to a draw tab **1306.** According to another aspect, the user is enabled to interact with the replay content **404** while it is being replayed, such as to add, delete, or otherwise modify content and save the changes made while in replay mode.

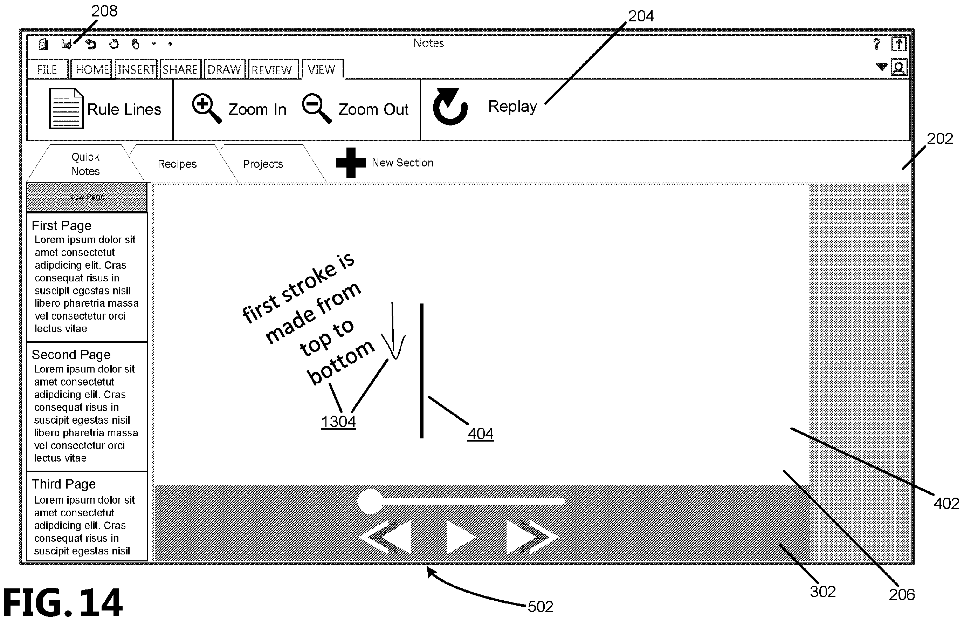

As another example of a situation in which it may be beneficial to a user to incrementally replay content includes learning to draw a Far East language character, such as a Kanji character, which is composed of specific strokes that are supposed to be made in a certain fashion and order. **FIGURES 14-16** illustrate an example incremental revealing of strokes for drawing a Kanji character (e.g., the Kanji character for "mouth" - 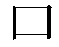 ). As illustrated in **FIGURES 14-16****,** the replay content **404** includes previously-added annotations **1304** that are added to the z-order and incrementally displayed with the replay content **404.** When an annotation is added to the z-order, it may share the z-order value for the position during the replay in which it was added or may be assigned a unique z-order value between the currently displayed and the elements that will next be displayed (forward in the z-order when the replay mode is forward and backward in the z-order when the replay mode is backward).

Annotations **1304** have a visible display state when the replay reaches their position in the replay order, but have a hidden display state at other times during the replay, as is illustrated in **FIGURES 14-16** where each annotation **1304** is displayed during the replay while a relevant piece of content **404** is added to the display. In other aspects, a user may set an annotation **1304** to persist across several portions of the content **404** being replayed, such that a given annotation **1304** may be displayed throughout the replay order or for a designated portion of the replay order.

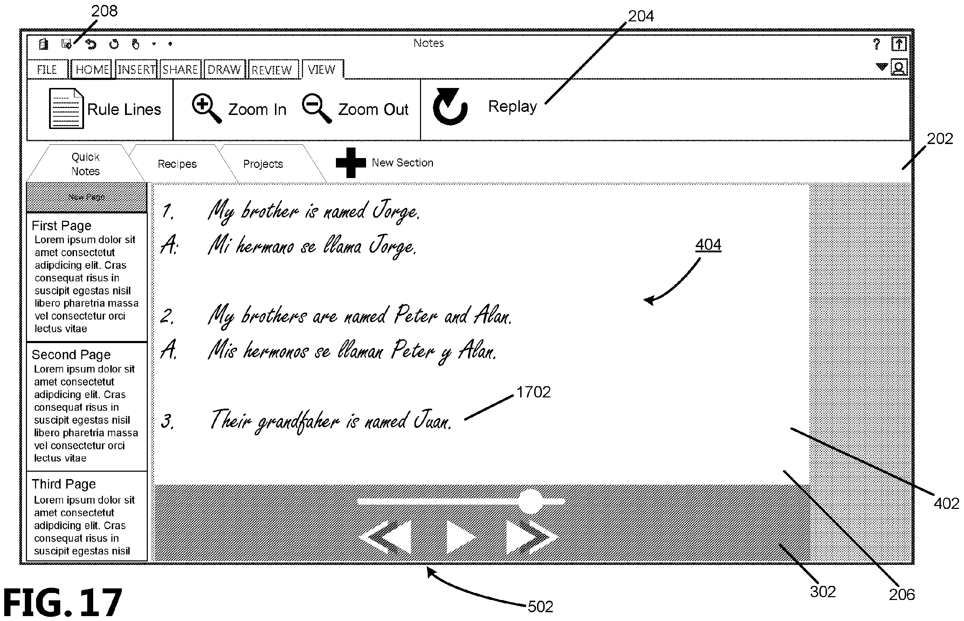

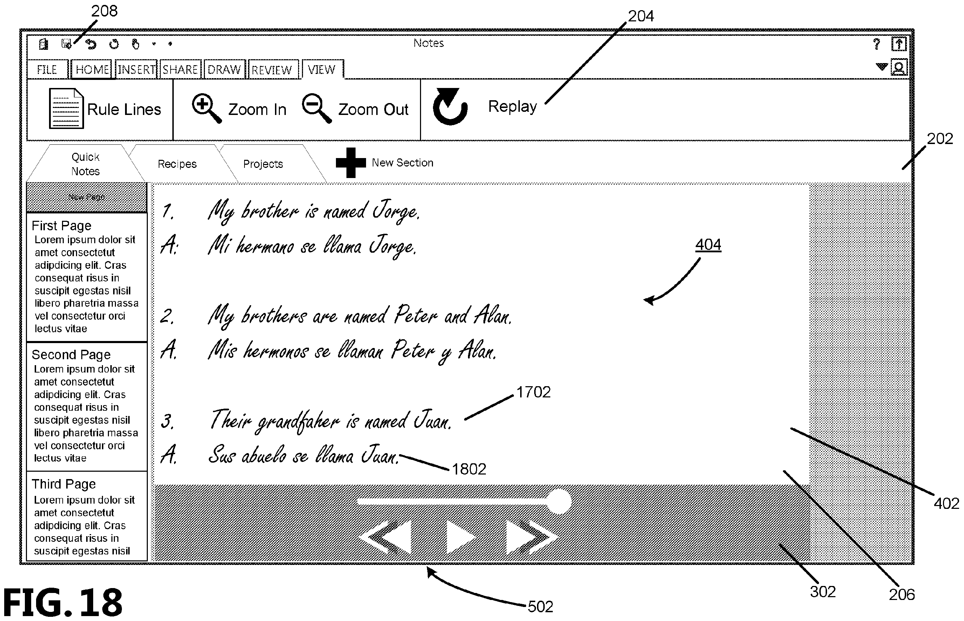

As another example of a situation in which it may be beneficial to a user to incrementally replay content includes students testing/quizzing themselves to study or a teacher lecturing from prepared content. For example, as illustrated in **FIGURE 17****,** a teacher teaching Spanish may prepare lecture notes that include a sentence in English **1702.** The teacher may wish to incrementally reveal the replay content **404** to enable students to try to answer before revealing the answer **1802,** as illustrated in **FIGURE 18****.**

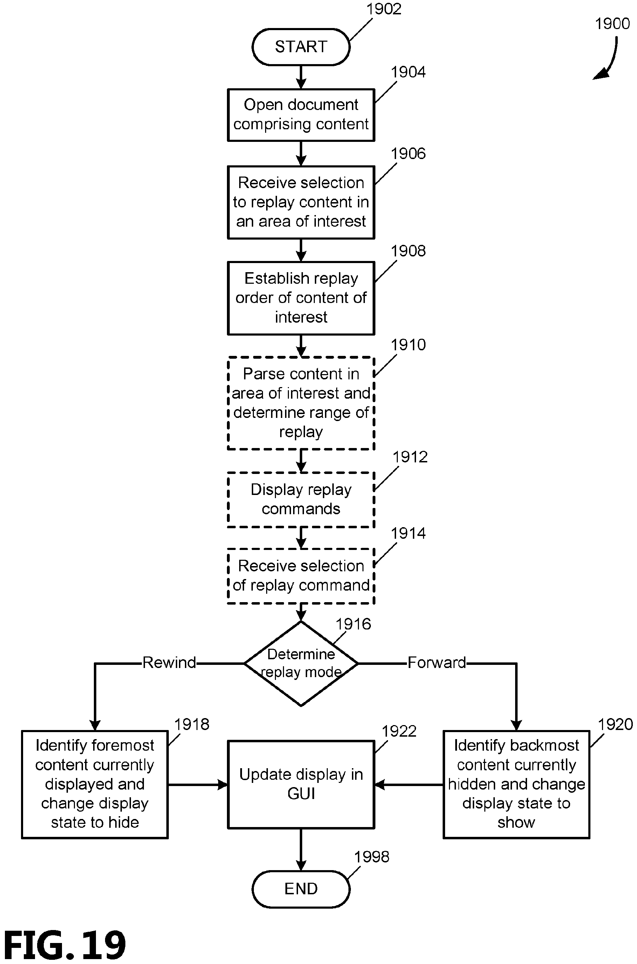

Having described an example operating environment and various examples, **FIGURE 19** is a flowchart showing general stages involved in an example method **1900** for providing incremental revealing and hiding of content. Method **1900** begins at OPERATION **1902,** and proceeds to OPERATION **1904,** where a document is loaded, wherein the document includes content, such as textual content, numerical content, digital ink stroke inputs, graphical content, and the like.

The method **1900** proceeds to OPERATION **1906,** where a selection to replay content in an area of interest **402** is received. For example, a user may select a "Replay" entry point **204** command and may then make a selection of a portion of content displayed on the canvas **206,** or may select to replay everything on the page or everything currently displayed on the canvas **206.**

The method **1900** proceeds to OPERATION **1908,** where a replay order of the content of interest (i.e., replay content or content that is located in the selected area of interest **402**) is established. For example, the content is assigned a replay-order value. In one example, the replay-order value is based on the content's structural hierarchy in back-to-front order (i.e., z-order). It is possible in this case that ordering is implicit in existing structure, and no computation is required as this stage. In another example, the replay-order value is based on a timestamp associated with a modification (e.g., input) of the content. Accordingly, newer or more recently added input has a higher replay-order value, and older or previously added input has a lower replay-order value. In another example, replay order value is based on a combination of structural hierarchy and timestamp association. For example, an object that was first added to the canvas 206, may have been modified at a later time to adjust its display properties (e.g., a spelling correction, a size/color/font adjustment, a theme application) and the replay-order may treat the modification as a separate element to display during replay or incorporate the modification when the object is first displayed during replay.

In various aspects, the user may set whether the z-order for replays includes or excludes display property changes for objects as part of the z-order. For example, when display property changes are included in the z-order, when the replay reaches the display property change the display property change will be applied (forward replay mode) or removed (backward replay mode). When the display property changes are excluded from the z-order, objects that are made visible will be displayed with their last-applied display properties.

The method **1900** continues to OPTIONAL OPERATION **1910,** where the content in the selected area of interest **402** is parsed, and the content elements within the selected area are counted, providing a range of replay from the beginning to the end. In some examples, the range of replay can be used to update the GUI to include replay functionality UI controls, such as a slider control (e.g., scrub bar **510**) showing a range of steps. At OPTIONAL OPERATION **1912,** one or more replay functionality UI controls (e.g., replay commands **502)** are displayed, and at OPTIONAL OPERATION **1914,** a selection of a replay command **502** is received. For example, a user may select the rewind command **508,** the fast forward command **506,** the play/pause command **504,** a position along the scrub bar **510,** provide keyboard input, etc. As should be appreciated, this operation is optional. For example, a replay mode (forward or backward) may be implicitly established via a user input (e.g., via a selection of a button or mouse wheel + ctrl + shift), and UI functionality controls may not be provided.

The method **1900** continues to a DECISION OPERATION **1916,** where a determination of a replay mode is made. In some examples, the determination is made based on a selected replay command **502.** If the replay mode is determined to be backward, for example, the rewind command **508** is selected, the scrub bar **510** is selected or moved in a backward direction indicating a selection to play previous content, etc., the method **1900** continues to OPERATION **1918,** where the foremost content that is currently displayed according to the replay-order value is identified, and the display state of the content is changed to hidden so as to incrementally hide the content.

If the replay mode is determined to be forward, for example, the fast forward command **506** is selected, the scrub bar **510** is selected or moved in a forward direction indicating a selection to play succeeding content, the play/pause command **504** is selected, etc., the method **1900** continues to OPERATION **1920,** where the backmost content according to the replay-order value is identified, and the display state of the content is changed to visible. As will be appreciated, if the replay mode is determined to be forward and is designated to start at a given point (e.g., the beginning of the replay order) all content ahead of the given point will have its display state set to hidden.

The method **1990** continues to OPERATION **1922,** where the display of the replay content **404** is updated in the GUI **202.** When the determination made at DECISION OPERATION **1916** is that the selected command is the play/pause command **504,** OPERATIONS **1920** and **1922** may repeat multiple times until each piece of content in the area of interest **402** is revealed so as to incrementally show the content.

Method **1900** may repeat OPERATIONS **1914-1922** multiple times according to a number of times the user selects to hide or reveal content in the selected area of interest. The method **1900** ends at OPERATION **1998.** Method **1900** may be repeated continuously or a predetermined number of times with the same or opposite replay modes to loop the replay of the content or walk back and forth through the replay order.

While implementations have been described in the general context of program modules that execute in conjunction with an application program that runs on an operating system on a computer, those skilled in the art will recognize that aspects may also be implemented in combination with other program modules. Generally, program modules include routines, programs, components, data structures, and other types of structures that perform particular tasks or implement particular abstract data types.

The aspects and functionalities described herein may operate via a multitude of computing systems including, without limitation, desktop computer systems, wired and wireless computing systems, mobile computing systems (e.g., mobile telephones, netbooks, tablet or slate type computers, notebook computers, and laptop computers), hand-held devices, multiprocessor systems, microprocessor-based or programmable consumer electronics, minicomputers, and mainframe computers.

In addition, according to an aspect, the aspects and functionalities described herein operate over distributed systems (e.g., cloud-based computing systems), where application functionality, memory, data storage and retrieval and various processing functions are operated remotely from each other over a distributed computing network, such as the Internet or an intranet. According to an aspect, user interfaces and information of various types are displayed via on-board computing device displays or via remote display units associated with one or more computing devices. For example, user interfaces and information of various types are displayed and interacted with on a wall surface onto which user interfaces and information of various types are projected. Interaction with the multitude of computing systems with which implementations are practiced include, keystroke entry, touch screen entry, voice or other audio entry, gesture entry where an associated computing device is equipped with detection (e.g., camera) functionality for capturing and interpreting user gestures for controlling the functionality of the computing device, and the like.

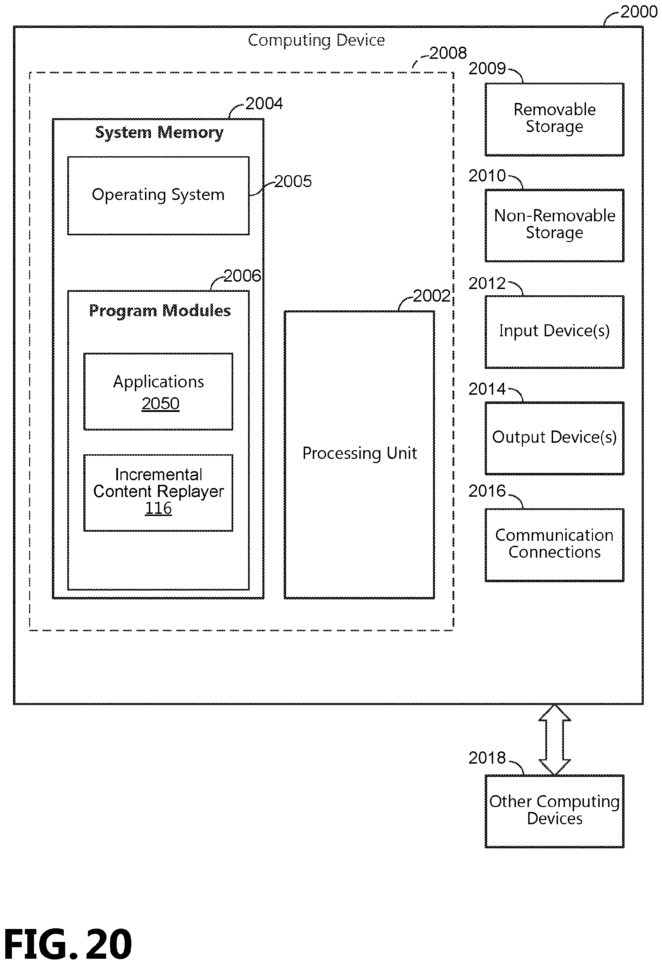

**FIGURES 20-22** and the associated descriptions provide a discussion of a variety of operating environments in which examples are practiced. However, the devices and systems illustrated and discussed with respect to **FIGURES 20-22** are for purposes of example and illustration and are not limiting of a vast number of computing device configurations that are used for practicing aspects, described herein.

**FIGURE 20** is a block diagram illustrating physical components (i.e., hardware) of a computing device **2000** with which examples of the present disclosure may be practiced. In a basic configuration, the computing device **2000** includes at least one processing unit **2002** and a system memory **2004.** According to an aspect, depending on the configuration and type of computing device, the system memory **2004** comprises, but is not limited to, volatile storage (e.g., random access memory), non-volatile storage (e.g., read-only memory), flash memory, or any combination of such memories. According to an aspect, the system memory **2004** includes an operating system **2005** and one or more program modules **2006** suitable for running software applications **2050.** According to an aspect, the system memory **2004** includes an incremental content replayer **116,** operable to enable a software application **2050** to employ the teachings of the present disclosure via stored instructions. The operating system **2005,** for example, is suitable for controlling the operation of the computing device **2000.** Furthermore, aspects are practiced in conjunction with a graphics library, other operating systems, or any other application program, and is not limited to any particular application or system. This basic configuration is illustrated in **FIGURE 20** by those components within a dashed line **2008.** According to an aspect, the computing device **2000** has additional features or functionality. For example, according to an aspect, the computing device **2000** includes additional data storage devices (removable and/or non-removable) such as, for example, magnetic disks, optical disks, or tape. Such additional storage is illustrated in **FIGURE 20** by a removable storage device **2009** and a non-removable storage device **2010.**

As stated above, according to an aspect, a number of program modules and data files are stored in the system memory **2004.** While executing on the processing unit **2002,** the program modules **2006** (e.g., incremental content replayer **116**) perform processes including, but not limited to, one or more of the stages of the method **1900** illustrated in **FIGURE 19****.** According to an aspect, other program modules are used in accordance with examples and include applications such as electronic mail and contacts applications, word processing applications, spreadsheet applications, database applications, slide presentation applications, drawing or computer-aided application programs, etc.

According to an aspect, the computing device **2000** has one or more input device(s) **2012** such as a keyboard, a mouse, a pen, a sound input device, a touch input device, etc. The output device(s) **2014** such as a display, speakers, a printer, etc. are also included according to an aspect. The aforementioned devices are examples and others may be used. According to an aspect, the computing device **2000** includes one or more communication connections **2016** allowing communications with other computing devices **2018.** Examples of suitable communication connections **2016** include, but are not limited to, radio frequency (RF) transmitter, receiver, and/or transceiver circuitry; universal serial bus (USB), parallel, and/or serial ports.

The term computer readable media, as used herein, includes computer storage media apparatuses and articles of manufacture. Computer storage media include volatile and nonvolatile, removable and non-removable media implemented in any method or technology for storage of information, such as computer readable instructions, data structures, or program modules. The system memory **2004,** the removable storage device **2009,** and the non-removable storage device **2010** are all computer storage media examples (i.e., memory storage). According to an aspect, computer storage media include RAM, ROM, electrically erasable programmable read-only memory (EEPROM), flash memory or other memory technology, CD-ROM, digital versatile disks (DVD) or other optical storage, magnetic cassettes, magnetic tape, magnetic disk storage or other magnetic storage devices, or any other article of manufacture which can be used to store information and which can be accessed by the computing device **2000.** According to an aspect, any such computer storage media is part of the computing device **2000.** Computer storage media do not include a carrier wave or other propagated data signal.

According to an aspect, communication media are embodied by computer readable instructions, data structures, program modules, or other data in a modulated data signal, such as a carrier wave or other transport mechanism, and include any information delivery media. According to an aspect, the term "modulated data signal" describes a signal that has one or more characteristics set or changed in such a manner as to encode information in the signal. By way of example, and not limitation, communication media include wired media such as a wired network or direct-wired connection, and wireless media such as acoustic, radio frequency (RF), infrared, and other wireless media.

**FIGURES 21A** and **21B** illustrate a mobile computing device **2100,** for example, a mobile telephone, a smart phone, a tablet personal computer, a laptop computer, and the like, with which aspects may be practiced. With reference to **FIGURE 21A****,** an example of a mobile computing device **2100** for implementing the aspects is illustrated. In a basic configuration, the mobile computing device **2100** is a handheld computer having both input elements and output elements. The mobile computing device **2100** typically includes a display **2105** and one or more input buttons **2110** that allow the user to enter information into the mobile computing device **2100.** According to an aspect, the display **2105** of the mobile computing device **2100** functions as an input device (e.g., a touch screen display). If included, an optional side input element **2115** allows further user input. According to an aspect, the side input element **2115** is a rotary switch, a button, or any other type of manual input element. In alternative examples, mobile computing device **2100** incorporates more or fewer input elements. For example, the display **2105** may not be a touch screen in some examples. In alternative examples, the mobile computing device **2100** is a portable phone system, such as a cellular phone. According to an aspect, the mobile computing device **2100** includes an optional keypad **2135.** According to an aspect, the optional keypad **2135** is a physical keypad. According to another aspect, the optional keypad **2135** is a "soft" keypad generated on the touch screen display. In various aspects, the output elements include the display **2105** for showing a graphical user interface (GUI), a visual indicator **2120** (e.g., a light emitting diode), and/or an audio transducer **2125** (e.g., a speaker). In some examples, the mobile computing device **2100** incorporates a vibration transducer for providing the user with tactile feedback. In yet another example, the mobile computing device **2100** incorporates a peripheral device port **2140,** such as an audio input (e.g., a microphone jack), an audio output (e.g., a headphone jack), and a video output (e.g., a HDMI port) for sending signals to or receiving signals from an external device.

**FIGURE 21B** is a block diagram illustrating the architecture of one example of a mobile computing device. That is, the mobile computing device **2100** incorporates a system (i.e., an architecture) **2102** to implement some examples. In one example, the system **2102** is implemented as a "smart phone" capable of running one or more applications (e.g., browser, e-mail, calendaring, contact managers, messaging clients, games, and media clients/players). In some examples, the system **2102** is integrated as a computing device, such as an integrated personal digital assistant (PDA) and wireless phone.

According to an aspect, one or more application programs **2150** are loaded into the memory **2162** and run on or in association with the operating system **2164.** Examples of the application programs include phone dialer programs, e-mail programs, personal information management (PIM) programs, word processing programs, spreadsheet programs, Internet browser programs, messaging programs, and so forth. According to an aspect, incremental content replayer **116** is loaded into memory **2162.** The system **2102** also includes a non-volatile storage area **2168** within the memory **2162.** The non-volatile storage area **2168** is used to store persistent information that should not be lost if the system **2102** is powered down. The application programs **2150** may use and store information in the non-volatile storage area **2168,** such as e-mail or other messages used by an e-mail application, and the like. A synchronization application (not shown) also resides on the system **2102** and is programmed to interact with a corresponding synchronization application resident on a host computer to keep the information stored in the non-volatile storage area **2168** synchronized with corresponding information stored at the host computer. As should be appreciated, other applications may be loaded into the memory **2162** and run on the mobile computing device **2100.**

According to an aspect, the system **2102** has a power supply **2170,** which is implemented as one or more batteries. According to an aspect, the power supply **2170** further includes an external power source, such as an AC adapter or a powered docking cradle that supplements or recharges the batteries.

According to an aspect, the system **2102** includes a radio **2172** that performs the function of transmitting and receiving radio frequency communications. The radio **2172** facilitates wireless connectivity between the system **2102** and the "outside world," via a communications carrier or service provider. Transmissions to and from the radio **2172** are conducted under control of the operating system **2164.** In other words, communications received by the radio **2172** may be disseminated to the application programs **2150** via the operating system **2164,** and vice versa.

According to an aspect, the visual indicator **2120** is used to provide visual notifications and/or an audio interface **2174** is used for producing audible notifications via the audio transducer **2125.** In the illustrated example, the visual indicator **2120** is a light emitting diode (LED) and the audio transducer **2125** is a speaker. These devices may be directly coupled to the power supply **2170** so that when activated, they remain on for a duration dictated by the notification mechanism even though the processor **2160** and other components might shut down for conserving battery power. The LED may be programmed to remain on indefinitely until the user takes action to indicate the powered-on status of the device. The audio interface **2174** is used to provide audible signals to and receive audible signals from the user. For example, in addition to being coupled to the audio transducer **2125,** the audio interface **2174** may also be coupled to a microphone to receive audible input, such as to facilitate a telephone conversation. According to an aspect, the system **2102** further includes a video interface **2176** that enables an operation of an on-board camera **2130** to record still images, video stream, and the like.

According to an aspect, a mobile computing device **2100** implementing the system **2102** has additional features or functionality. For example, the mobile computing device **2100** includes additional data storage devices (removable and/or non-removable) such as, magnetic disks, optical disks, or tape. Such additional storage is illustrated in **FIGURE 21B** by the non-volatile storage area **2168.**

According to an aspect, data/information generated or captured by the mobile computing device **2100** and stored via the system **2102** are stored locally on the mobile computing device **2100,** as described above. According to another aspect, the data are stored on any number of storage media that are accessible by the device via the radio **2172** or via a wired connection between the mobile computing device **2100** and a separate computing device associated with the mobile computing device **2100,** for example, a server computer in a distributed computing network, such as the Internet. As should be appreciated, such data/information are accessible via the mobile computing device **2100** via the radio **2172** or via a distributed computing network. Similarly, according to an aspect, such data/information are readily transferred between computing devices for storage and use according to well-known data/information transfer and storage means, including electronic mail and collaborative data/information sharing systems.

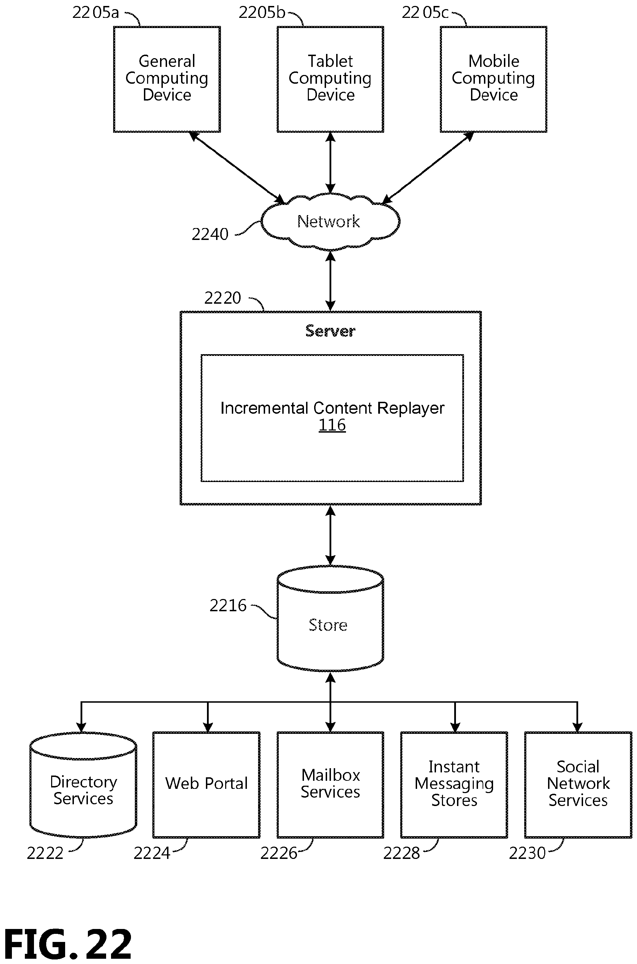

**FIGURE 22** illustrates one example of the architecture of a system for incremental replay of document content as described above. Content developed, interacted with, or edited in association with the incremental content replayer **116** is enabled to be stored in different communication channels or other storage types. For example, various documents may be stored using a directory service **2222,** a web portal **2224,** a mailbox service **2226,** an instant messaging store **2228,** or a social networking site **2230.** The incremental content replayer **116** is operative to use any of these types of systems or the like for distribution of selected content, as described herein. According to an aspect, a server **2220** provides the incremental content replayer **116** to clients **2205a-c** (generally clients **2205**). As one example, the server **2220** is a web server providing the EAE **180** over the web. The server **2220** provides the incremental content replayer **116** over the web to clients **2205** through a network **2240.** By way of example, the client computing device is implemented and embodied in a personal computer **2205a,** a tablet computing device **2205b** or a mobile computing device **2205c** (e.g., a smart phone), or other computing device. Any of these examples of the client computing device are operable to obtain content from the store **2216.**

Implementations, for example, are described above with reference to block diagrams and/or operational illustrations of methods, systems, and computer program products according to aspects. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved.

## Claims

1. A computer storage medium including instructions, which when executed by a computer, provide:
a productivity application (108);
an application programming interface for incrementally replaying content in a graphical user interface of the productivity application; and
an incremental content replayer (116), in communication with the productivity application via the application programming interface, operative to:
receive a selection of a user-defined area of interest (402) in the graphical user interface for which to replay the content from the productivity application displayed therein, wherein the content is comprised of a plurality of content elements, the user-defined area of interest being a subset of a total area of the graphical user interface;
establish a replay order of the content in the area of interest;
receive an indication of a starting point and a replay mode;
when the replay mode is backward:
identify a foremost content element relative to the starting point currently displayed; and
change a display state of the foremost content element to hidden;
when the replay mode is forward:
identify a backmost content element relative to the starting point currently displayed; and
change a display state of the backmost content element to visible;
receive an annotation during replay of the content; and
assign the annotation to the replay order at a given position based on a current position of the replay order, wherein a display state for the annotation is visible at the given position and hidden at other positions in the replay order.

2. The computer storage medium of claim 1, wherein in establishing the replay order of the content in the area of interest, the incremental content replayer is operative to index each content element with a z-order value based on a hierarchical structure of the content in the area of interest within the productivity application.

3. The computer storage medium of claim 1, wherein when the replay mode is forward the incremental content replayer is further operative to:
identify content elements from the plurality of content elements that are forward in the replay order relative to the starting point; and
set display states for the content elements that are forward in the replay order to hidden.

4. A method for incrementally replaying content in a graphical user interface, comprising:
receiving (1906) a selection of a user-defined area of interest (402) from which content is to be replayed, the content including a plurality of content elements, the user-defined area of interest being a subset of a total area of the graphical user interface;
establishing (1908) a replay order of the plurality of content elements;
receiving an indication of a starting point and a replay mode, wherein the replay mode is selected (1914) from forward and backward;
in response to the replay mode being backward:
identifying (1918) a foremost content element currently displayed in the area of interest relative to the starting point;
changing (1918) a display state of the foremost content element to hidden; and
updating (1922) the foremost content element according to the display state in the graphical user interface;
when the replay mode is forward:
identifying (1920) a backmost content element currently displayed in the area of interest relative to the starting point;
changing (1920) a display state of the backmost content element to visible; and
updating (1922) the backmost content element according to the display state in the graphical user interface;
receiving an annotation during replay of the content; and
assigning the annotation to the replay order at a given position based on a current position of the replay order, wherein a display state for the annotation is visible at the given position and hidden at other positions in the replay order.

5. The method of claim 4, wherein establishing the replay order of the content in the area of interest comprises indexing each content element with a z-order value based on hierarchical structure.

6. The method of claim 4, wherein establishing the replay order of the content in the area of interest comprises indexing each content element with a z-order value based on a timestamp.

7. The method of claim 4, wherein changes to display properties of the content are excluded from a z-order.

8. The method of claim 4, further comprising:
parsing the content in the area of interest and counting the plurality of content elements to provide a range of replay.

9. The method of claim 8, further comprising:
displaying a replay functionality in the graphical user interface according to the range of replay, the replay functionality operable to receive the indication of the starting point and the replay mode.

10. The method of claim 9, wherein the replay functionality is displayed in the graphical user interface proximate to the area of interest and includes a scrub bar indicating the starting point relative to the range of replay.

11. The method of claim 4, wherein in response to receiving the indication of the starting point, hiding each content element of the plurality of content elements ahead of the starting point in the replay order.

12. A system for incrementally replaying content in a graphical user interface, comprising:
an incremental content replayer (116) comprising:
an input manager (120) operative to receive a selection of a user-defined area of interest (402) in the graphical user interface, the user-defined area of interest being a subset of a total area of the graphical user interface;
a replay order generator (122) operative to identify content authored in the area of interest, the content comprising a plurality of content elements, and to establish a replay order of the plurality of content elements in the area of interest;
a state selector (124) operative to:
determine a replay mode;
when the replay mode is backward:
identify a foremost content element according to the replay order that is currently displayed in the area of interest; and
hide the foremost content element from display in the graphical user interface;
when the replay mode is forward:
identify a backmost content element according to the replay order that is currently displayed in the area of interest;
change a display state of the backmost content element from hidden to visible;
receive new content elements authored in the area of interest at a current position of the replay order while replaying the content;
add the new content elements to the plurality of content elements in the replay order at the current position of replaying the content; and
a user interface engine (126) operative to update the graphical user interface.

13. The system of claim 12, wherein hiding the foremost content element from display in the graphical user interface applies a reduced visibility effect to the foremost content element.

14. The system of claim 12, wherein when the replay mode is forward, all content elements of the plurality of content elements that ahead of the backmost content element according to the replay order are hidden from display in the graphical user interface.

15. The system of claim 12, wherein the new content elements are annotations whose display states are hidden except at the current position of the replay order, where the display states are set to visible by the state selector.

## Patentansprüche

1. Computerspeichermedium, das Anweisungen einschließt, die bei Ausführung durch einen Computer Folgendes bereitstellen:
eine Produktivitätsanwendung (108);
eine Anwendungsprogrammierschnittstelle zum inkrementellen Wiedergeben von Inhalt auf einer grafischen Benutzeroberfläche der Produktivitätsanwendung; und
eine Vorrichtung (116) zur inkrementellen Inhaltswiedergabe, die über die Anwendungsprogrammierschnittstelle mit der Produktivitätsanwendung in Kommunikation steht, die zu Folgendem betreibbar ist:
Empfangen einer Auswahl eines benutzerdefinierten Interessenbereichs (402) auf der grafischen Benutzeroberfläche, wofür der Inhalt aus der darin angezeigten Produktivitätsanwendung wiedergegeben werden soll, wobei der Inhalt aus einer Vielzahl von Inhaltselementen umfasst ist, und der benutzerdefinierte Interessenbereich eine Teilmenge eines Gesamtbereichs der grafischen Benutzeroberfläche ist;
Festlegen einer Wiedergabereihenfolge für den Inhalt im Interessenbereich; Empfangen einer Angabe eines Startpunkts und eines Wiedergabemodus;
wenn der Wiedergabemodus rückwärts ist:
Identifizieren eines vordersten Inhaltselements relativ zum aktuell angezeigten Startpunkt; und
Ändern eines Anzeigestatus des vordersten Inhaltselements auf ausgeblendet;
wenn der Wiedergabemodus vorwärts ist:
Identifizieren eines hintersten Inhaltselements relativ zum aktuell angezeigten Startpunkt; und
Ändern eines Anzeigestatus des hintersten Inhaltselements auf sichtbar;
Empfangen einer Anmerkung während der Inhaltswiedergabe; und
Zuweisen der Anmerkung zu der Wiedergabereihenfolge an einer bestimmten Position basierend auf einer aktuellen Position der Wiedergabereihenfolge, wobei ein Anzeigestatus für die Anmerkung an der bestimmten Position sichtbar und an anderen Positionen in der Wiedergabereihenfolge ausgeblendet ist.

2. Computerspeichermedium nach Anspruch 1, wobei beim Festlegen der Wiedergabereihenfolge des Inhalts im Interessenbereich die Vorrichtung zur inkrementellen Inhaltswiedergabe zum Indizieren jedes Inhaltselements mit einem Z-Reihenfolgewert, der auf einer hierarchischen Struktur des Inhalts im Interessenbereich innerhalb der Produktivitätsanwendung basiert, betreibbar ist.

3. Computerspeichermedium nach Anspruch 1, wobei, wenn der Wiedergabemodus vorwärts ist, die Vorrichtung zur inkrementellen Inhaltswiedergabe ferner zu Folgendem betreibbar ist:
Identifizieren von Inhaltselementen aus der Vielzahl von Inhaltselementen, die in der Wiedergabereihenfolge relativ zum Startpunkt vorwärts liegen; und
Setzen des Anzeigestatus der Inhaltselemente, die in der Wiedergabereihenfolge vorwärts liegen, auf ausgeblendet.

4. Verfahren zum inkrementellen Wiedergeben von Inhalt auf einer grafischen Benutzeroberfläche, umfassend:
Empfangen (1906) einer Auswahl eines benutzerdefinierten Interessenbereichs (402), aus dem Inhalt wiedergegeben werden soll, wobei der Inhalt eine Vielzahl von Inhaltselementen einschließt, wobei der benutzerdefinierte Interessenbereich eine Teilmenge eines Gesamtbereichs der grafischen Benutzeroberfläche ist;
Festlegen (1908) einer Wiedergabereihenfolge der Vielzahl von Inhaltselementen;
Empfangen einer Angabe eines Startpunkts und eines Wiedergabemodus, wobei der Wiedergabemodus vorwärts oder rückwärts ausgewählt (1914) wird;
als Reaktion darauf, dass der Wiedergabemodus rückwärts ist:
Identifizieren (1918) eines vordersten Inhaltselements, das aktuell im Interessenbereich relativ zum Startpunkt angezeigt wird;
Ändern (1918) eines Anzeigestatus des vordersten Inhaltselements auf ausgeblendet; und
Aktualisieren (1922) des vordersten Inhaltselements gemäß dem Anzeigestatus auf der grafischen Benutzeroberfläche;
wenn der Wiedergabemodus vorwärts ist:
Identifizieren (1920) eines hintersten Inhaltselements, das aktuell im Interessenbereich relativ zum Startpunkt angezeigt wird;
Ändern (1920) eines Anzeigestatus des hintersten Inhaltselements auf sichtbar; und
Aktualisieren (1922) des hintersten Inhaltselements gemäß dem Anzeigestatus auf der grafischen Benutzeroberfläche;
Empfangen einer Anmerkung während der Inhaltswiedergabe; und
Zuweisen der Anmerkung zu der Wiedergabereihenfolge an einer bestimmten Position basierend auf einer aktuellen Position der Wiedergabereihenfolge, wobei ein Anzeigestatus für die Anmerkung an der bestimmten Position sichtbar und an anderen Positionen in der Wiedergabereihenfolge ausgeblendet ist.

5. Verfahren nach Anspruch 4, wobei das Festlegen der Wiedergabereihenfolge des Inhalts im Interessenbereich das Indizieren jedes Inhaltselements mit einem Z-Reihenfolgewert basierend auf einer hierarchischen Struktur umfasst.

6. Verfahren nach Anspruch 4, wobei das Festlegen der Wiedergabereihenfolge des Inhalts im Interessenbereich das Indizieren jedes Inhaltselements mit einem Z-Reihenfolgewert basierend auf einem Zeitstempel umfasst.

7. Verfahren nach Anspruch 4, wobei Änderungen an Anzeigeeigenschaften des Inhalts von einer Z-Reihenfolge ausgeschlossen sind.

8. Verfahren nach Anspruch 4, ferner umfassend:
Parsen des Inhalts im Interessenbereich und Zählen der Vielzahl von Inhaltselementen, um einen Wiedergabebereich bereitzustellen.

9. Verfahren nach Anspruch 8, ferner umfassend:
Anzeigen einer Wiedergabefunktion auf der grafischen Benutzeroberfläche gemäß dem Wiedergabebereich, wobei die Wiedergabefunktion zum Empfangen der Angabe des Startpunkts und des Wiedergabemodus betreibbar ist.

10. Verfahren nach Anspruch 9, wobei die Wiedergabefunktion auf der grafischen Benutzeroberfläche in der Nähe des Interessenbereichs angezeigt wird, und eine Wiedergabeleiste einschließt, die den Startpunkt relativ zum Wiedergabebereich angibt.

11. Verfahren nach Anspruch 4, wobei als Reaktion auf das Empfangen der Angabe des Startpunkts jedes Inhaltselement der Vielzahl von Inhaltselementen vor dem Startpunkt in der Wiedergabereihenfolge ausgeblendet wird.

12. System zum inkrementellen Wiedergeben von Inhalt auf einer grafischen Benutzeroberfläche, umfassend:
eine Vorrichtung (116) zur inkrementellen Inhaltswiedergabe, umfassend:
einen Eingabemanager (120), der zum Empfangen einer Auswahl eines benutzerdefinierten Interessenbereichs (402) auf der grafischen Benutzeroberfläche betreibbar ist, wobei der benutzerdefinierte Interessenbereich eine Teilmenge eines Gesamtbereichs der grafischen Benutzeroberfläche ist;
einen Wiedergabereihenfolgegenerator (122), der zum Identifizeren von im Interessenbereich verfasstem Inhalt, wobei der Inhalt eine Vielzahl von Inhaltselementen umfasst, und zum Festlegen einer Wiedergabereihenfolge für die Vielzahl von Inhaltselementen im Interessenbereich betreibbar ist;
einen Statuswähler (124), der zu Folgendem betreibbar zum:
Bestimmen eines Wiedergabemodus;
wenn der Wiedergabemodus rückwärts ist:
Identifizieren eines vordersten Inhaltselements gemäß der Wiedergabereihenfolge, das aktuell im Interessenbereich angezeigt wird; und
Ausblenden des vordersten Inhaltselements aus der Anzeige auf der grafischen Benutzeroberfläche;
wenn der Wiedergabemodus vorwärts ist:
Identifizieren eines hintersten Inhaltselements gemäß der Wiedergabereihenfolge, das aktuell im Interessenbereich angezeigt wird;
Ändern eines Anzeigestatus des hintersten Inhaltselements von ausgeblendet auf sichtbar;
Empfangen von neuen, im Interessenbereich verfassten Inhaltselementen an einer aktuellen Position der Wiedergabereihenfolge während der Wiedergabe des Inhalts;
Hinzufügen der neuen Inhaltselemente zur Vielzahl von Inhaltselementen in der Wiedergabereihenfolge an der aktuellen Position der Wiedergabe des Inhalts; und
eine Benutzeroberflächen-Engine (126), die zum Aktualisieren der grafischen Benutzeroberfläche betreibbar ist.

13. System nach Anspruch 12, wobei das Ausblenden des vordersten Inhaltselements aus der Anzeige auf der grafischen Benutzeroberfläche einen Effekt reduzierter Sichtbarkeit auf das vorderste Inhaltselement ausübt.

14. System nach Anspruch 12, wobei, wenn der Wiedergabemodus vorwärts ist, alle Inhaltselemente der Vielzahl von Inhaltselementen, die gemäß der Wiedergabereihenfolge vor dem hintersten Inhaltselement liegen, aus der Anzeige auf der grafischen Benutzeroberfläche ausgeblendet werden.

15. System nach Anspruch 12, wobei die neuen Inhaltselemente Anmerkungen sind, deren Anzeigestatus ausgeblendet ist, außer an der aktuellen Position der Wiedergabereihenfolge, wo der Anzeigestatus durch den Statuswähler auf sichtbar gesetzt wird.

## Revendications

1. Support d'enregistrement informatique comprenant des instructions, qui, lorsqu'elles sont exécutées par un ordinateur, fournissent :
une application de productivité (108) ;
une interface de programmation d'application permettant de lire de manière incrémentielle un contenu dans une interface utilisateur graphique de l'application de productivité ; et
un lecteur de contenu incrémentiel (116), en communication avec l'application de productivité par l'intermédiaire de l'interface de programmation d'application, conçu pour :
recevoir une sélection d'une zone d'intérêt (402) définie par l'utilisateur dans l'interface utilisateur graphique dans laquelle la lecture du contenu de l'application de productivité est affichée, dans lequel le contenu comprend une pluralité d'éléments de contenu, la zone d'intérêt définie par l'utilisateur est un sous-ensemble d'une zone totale de l'interface utilisateur graphique ;
établir un ordre de lecture du contenu dans la zone d'intérêt ;
recevoir une indication d'un point de départ et d'un mode de lecture ;
lorsque le mode lecture est « en arrière » :
identifier un élément de contenu le plus en avant-plan par rapport au point de départ actuellement affiché ; et
changer un état d'affichage de l'élément de contenu le plus en avant-plan à un état masqué ;
lorsque le mode lecture est « en avant » :
identifier un élément de contenu le plus en arrière-plan par rapport au point de départ actuellement affiché ; et
changer un état d'affichage de l'élément de contenu le plus en arrière-plan à un état visible ;
recevoir une annotation lors de la lecture du contenu ; et
attribuer l'annotation à l'ordre de lecture à une position donnée en fonction d'une position actuelle de l'ordre de lecture, dans lequel un état d'affichage pour l'annotation est visible à la position donnée et masqué à d'autres positions dans l'ordre de lecture.

2. Support d'enregistrement informatique selon la revendication 1, dans lequel, lors de l'établissement de l'ordre de lecture du contenu dans la zone d'intérêt, le lecteur de contenu incrémentiel est conçu pour indexer chaque élément de contenu par une valeur d'ordre z basée sur une structure hiérarchique du contenu dans la zone d'intérêt dans l'application de productivité.

3. Support d'enregistrement informatique selon la revendication 1, dans lequel lorsque le mode de lecture est « en avant », le lecteur de contenu incrémentiel est en outre conçu pour :
identifier des éléments de contenu parmi la pluralité d'éléments de contenu, qui sont transmis dans l'ordre de lecture par rapport au point de départ ; et
régler les états d'affichage des éléments de contenu transmis dans l'ordre de lecture comme états masqués.

4. Procédé permettant de lire de manière incrémentielle un contenu dans une interface utilisateur graphique, comprenant :
la réception (1906) d'une sélection d'une zone d'intérêt (402) définie par l'utilisateur à partir de laquelle le contenu doit être lu, le contenu comprenant une pluralité d'éléments de contenu, la zone d'intérêt définie par l'utilisateur étant un sous-ensemble d'une zone totale de l'interface utilisateur graphique ;
l'établissement (1908) d'un ordre de lecture de la pluralité d'éléments de contenu ;
la réception d'une indication d'un point de départ et d'un mode de lecture, dans lequel le mode de lecture est sélectionné (1914) entre « en avant » et « en arrière » ;
en réponse au mode de lecture étant « en arrière » :
l'identification (1918) d'un élément de contenu le plus en avant-plan actuellement affiché dans la zone d'intérêt par rapport au point de départ ;
le changement (1918) d'un état d'affichage de l'élément de contenu le plus en avant-plan à un état masqué ; et
la mise à jour (1922) de l'élément de contenu le plus en avant-plan en fonction de l'état d'affichage dans l'interface utilisateur graphique ;
lorsque le mode lecture est « en avant » :
l'identification (1920) d'un élément de contenu le plus en arrière-plan actuellement affiché dans la zone d'intérêt par rapport au point de départ ;
le changement (1920) d'un état d'affichage de l'élément de contenu le plus en arrière-plan à un état visible ; et
la mise à jour (1922) de l'élément de contenu le plus en arrière-plan en fonction de l'état d'affichage dans l'interface utilisateur graphique ;
la réception d'une annotation lors de la lecture du contenu ; et
l'attribution de l'annotation à l'ordre de lecture à une position donnée en fonction d'une position actuelle de l'ordre de lecture, dans lequel un état d'affichage pour l'annotation est visible à la position donnée et masqué à d'autres positions dans l'ordre de lecture.

5. Procédé selon la revendication 4, dans lequel l'établissement de l'ordre de lecture du contenu dans la zone d'intérêt comprend l'indexation de chaque élément de contenu par une valeur d'ordre z basée sur une structure hiérarchique.

6. Procédé selon la revendication 4, dans lequel l'établissement de l'ordre de lecture du contenu dans la zone d'intérêt comprend l'indexation de chaque élément de contenu par une valeur d'ordre z basée sur une estampille temporelle.

7. Procédé selon la revendication 4, dans lequel les modifications apportées aux propriétés d'affichage du contenu sont exclues d'un ordre z.

8. Procédé selon la revendication 4, comprenant en outre :
l'analyse du contenu dans la zone d'intérêt et le calcul de la pluralité d'éléments de contenu pour fournir une plage de lecture.

9. Procédé selon la revendication 8, comprenant en outre :
l'affichage d'une fonctionnalité de lecture dans l'interface utilisateur graphique en fonction de la plage de lecture, la fonctionnalité de lecture pouvant être utilisée pour recevoir l'indication du point de départ et du mode de lecture.

10. Procédé selon la revendication 9, dans lequel la fonctionnalité de lecture est affichée dans l'interface utilisateur graphique à proximité de la zone d'intérêt et comprend une barre de défilement indiquant le point de départ par rapport à la plage de lecture.

11. Procédé selon la revendication 4, dans lequel en réponse à la réception de l'indication du point de départ, chaque élément de contenu de la pluralité d'éléments de contenu avant le point de départ dans l'ordre de lecture est masqué.

12. Système permettant de lire de manière incrémentielle un contenu dans une interface utilisateur graphique, comprenant :
un lecteur (116) du contenu incrémentiel comprenant :
un gestionnaire d'entrée (120) conçu pour recevoir une sélection d'une zone d'intérêt définie par l'utilisateur (402) dans l'interface utilisateur graphique, la zone d'intérêt définie par l'utilisateur étant un sous-ensemble d'une zone totale de l'interface utilisateur graphique ;
un générateur (122) de l'ordre de lecture conçu pour identifier un contenu créé dans la zone d'intérêt, le contenu comprenant une pluralité d'éléments de contenu, et pour établir un ordre de lecture de la pluralité d'éléments de contenu dans la zone d'intérêt ;
un sélecteur d'état (124) conçu pour :
déterminer un mode de lecture ;
lorsque le mode lecture est « en arrière » :
identifier un élément de contenu le plus en avant-plan en fonction de l'ordre de lecture, qui est actuellement affiché dans la zone d'intérêt ; et
masquer l'élément de contenu le plus en avant-plan de l'affichage dans l'interface utilisateur graphique ;
lorsque le mode lecture est « en avant » :
identifier un élément de contenu le plus en arrière-plan en fonction de l'ordre de lecture, qui est actuellement affiché dans la zone d'intérêt ;
changer un état d'affichage de l'élément de contenu le plus en arrière-plan de masqué à visible ;
recevoir de nouveaux éléments de contenu créés dans la zone d'intérêt à une position actuelle de l'ordre de lecture tout en lisant le contenu ;
ajouter des nouveaux éléments de contenu à la pluralité d'éléments de contenu dans l'ordre de lecture à la position actuelle de lecture du contenu ; et
un moteur (126) de l'interface utilisateur conçu pour mettre à jour l'interface utilisateur graphique.

13. Système selon la revendication 12, dans lequel le fait de masquer l'élément de contenu le plus en avant-plan de l'affichage dans l'interface utilisateur graphique applique un effet de visibilité réduite à l'élément de contenu le plus en avant-plan.

14. Système selon la revendication 12, dans lequel lorsque le mode de lecture est « en avant », tous les éléments de contenu de la pluralité d'éléments de contenu, qui précèdent l'élément de contenu le plus en arrière-plan en fonction de l'ordre de lecture sont masqués de l'affichage dans l'interface utilisateur graphique.

15. Système selon la revendication 12, dans lequel les nouveaux éléments de contenu sont des annotations dont les états d'affichage sont masqués sauf à la position actuelle de l'ordre de lecture, où les états d'affichage sont définis comme visibles par le sélecteur d'état.
